Europäisches Patentamt

European Patent Office

Office européen des brevets

(19)

(11) Veröffentlichungsnummer : **0 193 776**
**B1**

# (12) EUROPÄISCHE PATENTSCHRIFT

(45) Veröffentlichungstag der Patentschrift :
22.02.89

(21) Anmeldenummer : 86101995.8

(22) Anmeldetag : 17.02.86

(51) Int. Cl.⁴ : **F 16 K 31/04**

(54) Armatur zum Absperren einer Strömung.

(30) Priorität : 28.02.85 DE 3507091

(43) Veröffentlichungstag der Anmeldung :
10.09.86 Patentblatt 86/37

(45) Bekanntmachung des Hinweises auf die Patenterteilung : 22.02.89 Patentblatt 89/08

(84) Benannte Vertragsstaaten :
AT CH DE FR GB IT LI

(56) Entgegenhaltungen :
DE—C— 862 537
US—A— 2 992 807
Siemens-Katalog MP 35.1980
Siemens-Katalog MP 35.1980 Baubeschreibung (2.77)
BDW 10 der Fa. Sulzer.

(73) Patentinhaber : Siemens Aktiengesellschaft Berlin
und München
Wittelsbacherplatz 2
D-8000 München 2 (DE)

(72) Erfinder : Tratz, Herbert, Dr. Dipl.-Ing.
Scheerstrasse 3
D-8561 Ottensoos (DE)
Erfinder : Schabert, Hans-Peter, Dipl.-Ing.
Friedrich-Bauer-Strasse 28
D-8520 Erlangen (DE)
Erfinder : Laurer, Erwin, Dipl.-Ing.
Frankenstrasse 5
D-8521 Möhrendorf (DE)

EP 0 193 776 B1

**Beschreibung**

Die Erfindung betrifft ein Verfahren zum Absperren einer Strömung, mit einer Armatur mit einem Gehäuse, in dem ein Verschlußstück mit Hilfe eines Gewindes zwischen der Auf- und der Zu-Endstellung bewegbar ist, mit einem Drehantrieb, der in der Zu-Endstellung der Armatur mit zeitlicher Verzögerung abgeschaltet wird, mit einem nachgiebigen Glied, das die durch die kinetische Energie des Antriebs erzeugte Drehmomentüberhöhung in dieser Endstellung begrenzt, und mit einer Drehmomentsteuerung des Antriebs. Gegenstand der Erfindung ist ferner eine Armatur zum Ausüben eines solchen Verfahrens.

Der Antrieb ist zumeist ein elektrischer Stellantrieb mit einem Elektromotor, der über ein Getriebe arbeitet. Es kann sich aber auch um einen Druckmittelantrieb mit Druckluft, Hydraulikflüssigkeit oder dergleichen handeln. Die Armatur kann ein Ventil, Schieber, Hahn sein.

Es ist allgemein üblich geworden, in Stellantrieben sogenannte Wanderschnecken einzusetzen, die eine innerhalb von 10 % genaue drehmomentabhängige Motorabschaltung bewirken. Diese Stellantriebe sind universell und damit auch für Regelarmaturen einsetzbar. Da sie perfektioniert sind für alle Einsatzmöglichkeiten, wie der Siemens-Katalog MP35.1980 zeigt, sind sie aber auch entsprechend komplex und aufwendig sowohl im Platzbedarf als auch in der Zahl der anzuschließenden elektrischen Leitungsadern.

Die Bausteinbeschreibung (2.77) des Drehmomentwächters BDW10 der Fa. Sulzer zeigt eine perfektionierte elektrische Schalteinheit, die die mechanische Drehmomentmessung im Motor durch eine Wirkleistungsmessung ersetzt und hiervon die drehmomentabhängige Motorabschaltung auslöst. Der Aufwand für die Armaturenbetätigung ist dennoch erheblich.

Die Erfindung geht von der Aufgabe aus, mit einem einfachen Verfahren Armaturen der vorgenannten Art unempfindlicher gegen Störungen zu machen, die durch lange Stillstandszeiten verursacht sein können. In solchen Fällen kann durch Korrosionserscheinungen eine wesentliche Erhöhung der Reibung und der für die Bewegung notwendigen Kraft verursacht werden, die das sichere Arbeiten beeinträchtigt. Dies macht sich besonders dann bemerkbar, wenn der Antrieb das Verschlußstück ohne kraft- bzw. drehmomentabhängige Abschaltung in die Schließstellung bewegt hat.

Das vorgenannte Problem besteht besonders in kerntechnischen Anlagen mit ihren hohen Sicherheitsanforderungen. Wie aus der sicherheitstechnischen Regel des kerntechnischen Ausschusses KTA 3504 « Elektrische Antriebe des Sicherheitssystems für Kernkraftwerke » in der Fassung 1/84 ersichtlich ist, wird im Kapitel « Auslegung der Stellantriebe » verlangt, daß der Antrieb bei Spannungen zwischen 80 % und 110 % der Nennspannung betrieben werden kann. Dies wirkt sich quadratisch auf das erzeugbare maximale Drehmoment aus, das somit zwischen 64 % und 121 % des Normalwertes schwanken kann, d. h. fast um den Faktor 2.

Bei der Ermittlung des Losbrechmoments, das der Stellantrieb liefern muß, wenn eine Armatur aus der Endlage aufgefahren wird, soll das Zusammentreffen folgender ungünstiger Annahmen berücksichtigt werden :

1. Beim Schließvorgang : Der Antriebsmotor fährt mit Überspannung in die geschlossene Endstellung und wird dort nicht abgeschaltet (Absteuerversagen). Der Reibungsbeiwert im Gewinde ist niedrig. Die Drehmomentüberhöhung beim schnellen Abbremsen ist nur mäßig begrenzt. Gegendruck gegen das Verschlußstück ist nicht vorhanden. Die Stopfbuchsreibung ist gering. Diese Bedingungen führen zu einer starken Verspannung des Gewindes am Ende des Schließvorganges.

2. Während der Stillstandszeit : Der Reibungsbeiwert im Gewinde erhöht sich auf das 2-3-fache. Durch Wärmedehnung der Armaturenbauteile gegeneinander erhöht sich die Verspannung. Die Stopfbuchse wird nachgezogen und erhält dadurch eine verstärkte Haftung.

3. Beim Lösevorgang : Der Motor erhält Unterspannung. Der Differenzdruck am Verschlußstück versucht, es im Dichtsitz zu halten.

Die Summe dieser ungünstigen Faktoren kann den für das Lösen günstigen Einfluß der negativen Spindelsteigung bei weitem übersteigen. Wird die Öffnungsbewegung durch einen Rücksitz begrenzt, der die Bewegung des Stellantriebes abwürgt, dann treten diese Faktoren dort in gleicher Weise auf.

Für das Absteuerversagen wird nach KTA 3504 lediglich gefordert, daß die Armaturenbauteile mechanisch nicht beschädigt werden. Das Lösen der stark verklemmten Armatur wird üblicherweise dem Handeingriff überlassen. Hierbei wird von verschiedenen Firmen ein Hammerschlageffekt erwähnt.

Der vorerwähnte günstige Einfluß der Spindelsteigung basiert auf der Tatsache, daß die Kraft der in einer Endstellung verklemmten Spindel die Mutter von sich aus zurückdrehen könnte, wenn nur die Spindelsteigung genügend steil (mehrgängiges Gewinde) oder die Reibung im Gewinde (mit Walzkörpern) und in der Mutternauflage genügend klein wird. Derartige nicht selbsthemmende Spindeln erfordern allerdings zusätzliche Maßnahmen im Bereich des Antriebes, etwa eine Schnecke, eine Motorbremse oder eine separate Bremse. Die Dichtheit der geschlossenen Armatur würde abhängig von einer Reihe von Zusatzbauteilen, deren Verhalten auch bei Vibrationen vorher sorgfältig untersucht werden müßte. In der großen Mehrzahl der praktischen Anwendungen wird deshalb das selbsthemmende Gewinde bevorzugt. Zuverlässige Selbsthemmung liegt vor, wenn ein niedriger Reibwert im Gewinde von zum Beispiel 0,07 und eine Mutternauflage mit Nadellager vorausgesetzt werden.

Zur Lösung der eingangs genannten Aufgabe unter Berücksichtigung der vorstehenden Randbedingungen ist bei dem erfindungsgemäßen Verfahren vorgesehen, daß der dem gesamten Hub des Verschlußstückes entsprechende Drehbereich des Antriebes für beide Fahrrichtungen in zwei Teilen durchlaufen wird, von denen der erste, der Anfangsbereich, in der Endstellung beginnt und vor Erreichen der neuen Endstellung endet, und der zweite, der Restbereich, den Teil vom Ende des Anfangsbereiches bis zum Erreichen der neuen Endstellung umfaßt, wobei im Anfangsbereich mit einem verfügbaren Anlaufdrehmoment (Losbrechmoment) des Antriebes gefahren wird, das unter Berücksichtigung der unteren Toleranzgrenze der Energieversorgung um mindestens 10 % höher ist als das größte Drehmoment, das der Antrieb unter Berücksichtigung der oberen Toleranzgrenze der Energieversorgung im Restbereich aufbringen kann.

Mit der Erfindung wird erreicht, daß der Antrieb die Armatur mit Sicherheit wieder öffnet, weil bei dem Losfahren aus der Schließ-Endstellung eine größere Kraft aufgewendet werden kann als bei der Bewegung in diese Endlage. Dies ist mit einem sehr stark vereinfachten Stellantrieb ohne drehmomentabhängige Abschaltung zu schaffen, der im Aufbau kompakt ist, mit wenigen Leitungsadern (R, S, T, O) auskommt und trotzdem voll zuverlässig arbeitet. Schaltelemente brauchen an der Armatur nur in Form von zwei robusten Endschaltern vorhanden zu sein, um eine rein informatorische Endstellungsanzeige zu liefern.

Das Verfahren nach der Erfindung kann in verschiedener Weise weitergestaltet werden. Vorteilhaft ist es zum Beispiel, daß der Antrieb frühestens 0,5 Sekunden nach dem Ende der für den gesamten Drehbereich benötigten Laufzeit abgeschaltet wird, so daß die Armatur auch bei einer gewissen Schwergängigkeit im Restbereich mit Sicherheit ihren vollen Hub ausführt.

Eine besonders günstige Maßnahme zur Überwindung der eingangs genannten Schwierigkeiten besteht darin, daß die Versorgungsspannung eines elektrischen Antriebsmotors im Restbereich gegenüber der im Anfangsbereich um mindestens 10 % herabgesetzt ist, wobei die Herabsetzung weg- oder vorzugsweise zeitabhängig ausgelöst wird.

Bei Armaturen zur Ausübung des zuletztgenannten Verfahrens kann der Elektromotor vorteilhaft ein Drehstrommotor mit Käfigläufer sein, dessen Kippmoment nicht größer als das Anlaufmoment ist. Hierdurch wird vermieden, daß der Elektromotor nach dem Durchlaufen des Ventilhubes in der Schließstellung oder an einem den Öffnungshub begrenzenden Anschlag eine unerwünscht große Kraft ausübt. Elektromotoren mit solchen Kennlinien sind bekannt und im Handel erhältlich.

Die Erfindung kann auch mit Armaturen vorteilhaft ausgeübt werden, bei denen das Gewinde zum Verschieben des Verschlußstückes selbsthemmend ist. Für diesen Fall ist vorgesehen, daß der Anfangsbereich einen Leerwinkel von 3° bis 180° umfaßt, in dem sich der Antrieb gegenüber dem drehbaren Gewindebauteil frei drehen und beschleunigen kann, und einen kleinen Zusatzwinkel, in dem die kinetische Energie des Antriebes so ungedämpft auf das drehbare Gewindebauteil übergeht, daß das Drehmoment mehr als verdoppelt wird. Vorzugsweise ist dabei noch als Ausgestaltung vorgesehen, daß der Betrag des Leerwinkels und das Verhältnis der Spannungsherabsetzung so aufeinander abgestimmt sind, daß der Elektromotor bei voller Spannung mehr als 90 % seiner Nenndrehzahl erreicht, während bei herabgesetzter Spannung nicht mehr als 50 % erreicht werden, daß am Ende des Leerwinkels Mitnehmer vorhanden sind, an denen die Rotationsenergie des Motors zu einer momentanen Kraftspitze umgesetzt wird, die bei voller Spannung das Losbrechen des möglicherweise festsitzenden Gewindes bewirkt, und daß der Drehantrieb in der endstellungsseitigen Ausgangslage im Leerwinkelbereich gehalten (z. B. mittels Bremse) oder vorab dorthin zurückgestellt wird (z. B. mittels Niedrigspannung am Elektromotor).

Für den Fall eines Klemmens der Armatur kann man auch durch wiederholte Betätigungsversuche ein « Losbrechen » erreichen. Zu diesem Zweck kann man so vorgehen, daß die Steuerung des Elektromotors einen Rückwärts- und Vorwärtslauf auslöst, bis das Verschlußstück den Bereich der geschlossenen Endstellung (z. B. 20 % des Hubes) verläßt.

Die für die Erfindung kennzeichnende Anpassung des vom Antrieb gelieferten Drehmoments an den Kraftbedarf kann auch in der Weise erreicht werden, daß der Drehantrieb im Restbereich durch eine zusätzliche Reibungsbremse belastet wird, die das im Gewinde verfügbare Drehmoment um mindestens 10 % gegenüber seinem Wert im Anfangsbereich herabsetzt. Dabei ist es günstig, wenn der Anfangsbereich als Leerwinkel zwischen der Gewindemutter und einer Bremsbuchse vorgegeben ist, die zur Spindelmutter hin mit einem Wälzlager, zum Gehäuse hin mit einem Gleitlager ausgestattet ist, und daß der Leerwinkel kleiner ist als eine volle Umdrehung des Antriebs.

Eine andere Ausführungsform der Erfindung besteht darin, daß zwischen dem Drehantrieb und dem drehbaren Gewindebauteil ein Schaltgetriebe angeordnet ist, das im Anfangsbereich eine Drehmomenterhöhung um mindestens den Faktor 1,2, vorzugsweise 3,0, gegenüber dem Drehmoment des Antriebs im Restbereich bewirkt. Dabei kann das Schaltgetriebe ein Verzweigungsgetriebe mit drei Wellen sein, insbesondere ein Planetenzahnradgetriebe, dessen treibende Welle die getriebene Welle am Ende des Anfangsbereichs mitnimmt, wobei das im Mitnehmer übertragene relative Drehmoment zu einer selbsttätigen Schaltbewegung führt, die die dritte Welle des Verzweigungsgetriebes aus ihrer Drehfixierung mit dem Getriebegehäuse löst, solange dieses Drehmoment einen vorgebbaren Wert überschreitet. Der Mitnehmer kann einen Anschlag und eine gegen eine Schräge mit 20° bis 70° Steigung laufende Rolle umfassen, und die Drehfixierung wird durch eine Reibungsbremse, vorzugsweise eine Lamellenbremse bewirkt, die durch eine Axialfeder vorgespannt ist.

Für alle Ausführungsformen der Erfindung ist es vorteilhaft, wenn die Spindelstellungen durch wegabhängige Endschalter erfaßt werden, die zur Abschaltung des Antriebs in der Offenstellung, zur Kontrolle einer Repetierautomatik und/oder zur Gewinnung einer etwaigen Störmeldung nach erfolglosem Ablauf der vorgegebenen Fahrzeit benutzt werden. Dies gilt auch für den Fall, daß die Offenstellung durch einen Gegenanschlag, vorzugsweise einen Rücksitz, definiert ist, daß dort ein weiteres nachgiebiges Glied zur Begrenzung der Drehmomentüberhöhung vorgesehen ist, und daß die für die Schließstellung vorliegende Ausbildung symmetrisch für die Offenstellung vorgesehen ist.

Die Erfindung kann vorteilhaft in einer Form verwirklicht werden, bei der der Drehantrieb, die Gewindebauteile und die Zwischenglieder baulich zu einem Schubantrieb zusammengefaßt sind. Der Schubantrieb ist dann eine vorgefertigte Einheit, die an unterschiedliche Armaturen, gegebenenfalls auch nachträglich angebaut werden kann. Ein solcher Schubantrieb kann auch selbständig gewartet und bei Bedarf ausgetauscht werden.

Zur näheren Erläuterung der Erfindung wird im folgenden anhand der Zeichnung ein Ausführungsbeispiel beschrieben, das in Fig. 1 in einer Seitenansicht, zum Teil im Schnitt, dargestellt ist. Fig. 2 zeigt einen Schnitt durch die Getriebeabtriebswelle mit Leerwinkel. Die Fig. 3 und 4 zeigen eine Ausführungsform einer Bremsbuchse, die die Gewindemutter umfaßt in einer Seitenansicht und Draufsicht. In der Fig. 5 ist ein Verzweigungsgetriebe dargestellt, das zur Krafterhöhung in den Endlagen dient. Einzelheiten des Getriebes zeigt die Fig. 6.

Das Absperrventil nach der Erfindung besitzt ein Gehäuse 1 mit einem Einlaßkanal 2 und einem Auslaßkanal 3. Der dazwischenliegend von einer eingepreßten Buchse 4 gebildete Ventilsitz 5 mit 25 mm lichter Weite arbeitet mit einem Verschlußstück 6 zusammen, das mit einer Spindel 7 betätigt wird.

Die stählerne Spindel 7 sitzt mit einem Trapezgewinde 8 von Durchmesser 16 mm und Steigung 4 mm in einer Bronzemutter 9, die mit zwei Wälzlagern 10 und 11 abgestützt ist. Die Mutter 9 ist im wesentlichen spielfrei mit einer Paßfeder 15 mit der Antriebswelle 16 eines Planetengetriebes 17 gekoppelt, das von einem angeflanschten Elektromotor 18 in Bewegung gesetzt werden kann. Der Drehstrommotor hat eine Nennleistung von 0,37 kW und einen Kurzschlußläufer, dessen Kippmoment nicht höher liegt als das Anlaufmoment. Dieses Anzugsmoment wird durch das Getriebe 17 auf einen Wert von 30 Nm bei Nennspannung eingestellt. Bei der Drehbewegung der Mutter 9 verschiebt sich deshalb die Spindel 7 in ihrer Längsrichtung über einen Hub von 8 mm, bis das Verschlußstück 6 einen zweiten Ventilsitz 6a, den sogenannten Rücksitz, erreicht, der den Stellweg begrenzt und die nachgeschaltete Dichtpackung 6b vom Druck des Mediums (zum Beispiel Dampf) entlastet. Die gesamte Stellzeit beträgt etwa 1 Sekunde.

Die Spindel 7 wird durch eine Mitnehmergabel 7a daran gehindert, sich während der Drehbewegung der Mutter 9 mitzudrehen. Die Gabel betätigt einen oberen Endschalter 7b und einen unteren Endschalter 7c, wobei jeder 2 mm vor Erreichen der zugehörigen Endstellung anspricht.

Beim Erreichen der Endstellungen wird der Schwung des Motorläufers abgebremst und es kommt zu einer Überhöhung des Drehmoments auf die Mutter 9. Um diese Überhöhung auf einen Wert von etwa 30 % zu begrenzen, sind Tellerfederpakete 28 vorgesehen, deren Elastizität sich zu den Nachgiebigkeiten der Spindel 7, der Ventillaterne 1a und des Getriebes 17 addiert.

Die nicht weiter dargestellte Versorgung des Motors 18 mit Drehstrom ist derart aufgebaut, daß die Spannung mit ± 10 % konstant bleibt. Dies wirkt sich quadratisch auf das Anlaufmoment aus, das demnach zwischen + 21 % und — 19 % schwanken kann. Zusätzlich ist die Stromversorgung mit zwei Zeitgliedern ausgestattet.

Einmal wird nach einem Teilhub von 40 % (etwa 0,5 sec) die Motorspannung (mittels Vorschaltwiderstands, Trafos, o. ä.) auf 58 % ihres Anfangswerts herabgesetzt. Der Motor entwickelt deshalb nur noch ein Drittel des Drehmoments, wenn er am Ende des Öffnungshubs nach 1 Sekunde abgewürgt wird. Die schwungbedingte Drehmomentüberhöhung addiert sich zu diesem Drittel.

Das zweite Zeitglied schaltet nach 2 Sekunden die Stromversorgung ab, damit die Wicklung des stillstehenden Motors nicht überhitzt wird.

Beim Schließen des Ventils hat der Endstellungsschalter 7c bis zu diesem Zeitpunkt sein Signal gegeben. Fehlt das Signal, so kann eine rein informatorische Störmeldung gebildet werden.

Eine weitere Störmeldung kann gebildet werden, wenn die Motorspannung beim Ansprechen des Endstellungsschalters 7c noch nicht auf einen Wert von unter 75 % ihres Anfangswertes abgesunken sein sollte. Diese Störmeldung würde bedeuten, daß das Ventil mit zu hohem Moment in seine Endstellung gefahren ist.

Beim Wiederöffnen des Ventils verläuft der Vorgang mit umgekehrter Drehrichtung des Motors in analoger Weise.

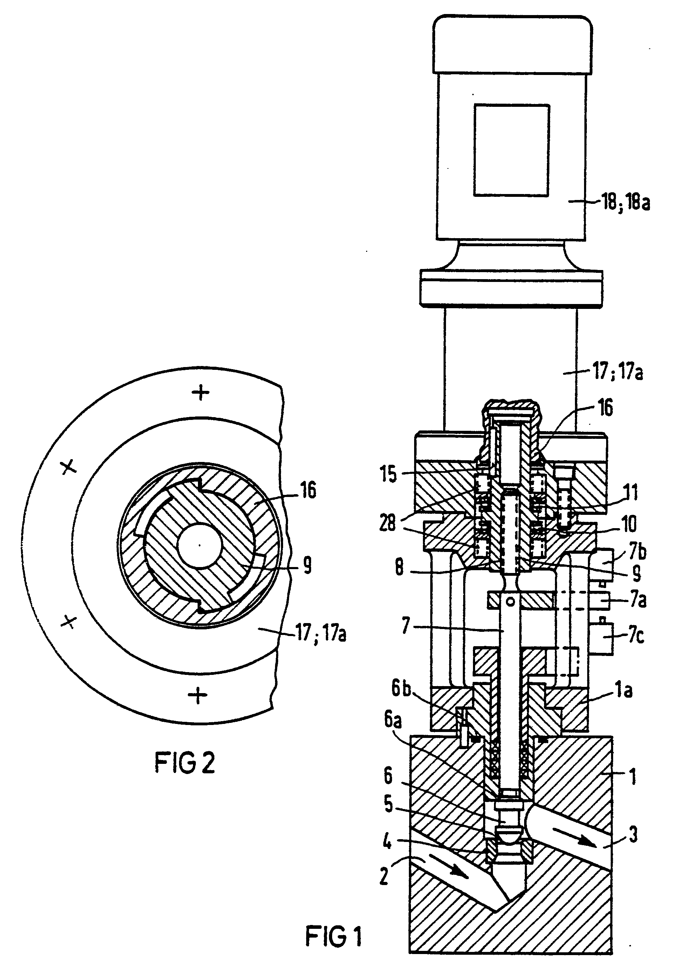

Fig. 2 zeigt eine Modifikation der Anordnung nach Fig. 1. Die selbsthemmende Mutter 9 ist mit der Getriebe-Abtriebswelle 16 nicht mehr spielfrei verbunden. Vielmehr ist ein leerer Drehwinkel von 50° vorgesehen. Der Motor 18 kann während dieses Leerwinkels mehr als 90 % seiner vollen Drehzahl erreichen und dann an der als Mitnehmer 9a wirkenden Flanke der Mutter 9 einen Hammerschlageffekt entwickeln, der zu einem besonders hohen Losbrechmoment führt.

Im Getriebe 17 ist eine nicht weiter dargestellte schwachwirkende Bremse 17a eingebaut, die dauernd etwa 7 % des vollen Drehmoments verzehrt (2 Nm). Sie sorgt dafür, daß der Motor sich nach Erreichen der Endstellung nicht unbeabsichtigt zurückdreht und dadurch die Möglichkeit zur Beschleunigung innerhalb des leeren Drehwinkels teilweise oder ganz verliert.

Die Dauerbremse 17a kann selbstverständlich ersetzt werden durch eine dem Motor zugeordnete, nicht näher dargestellte Bremse 18a mit Betätigung durch Magnet oder durch Verschiebeanker.

Ersatz ist auch möglich dadurch, daß der stillstehende Motor nach 2 Sekunden nicht voll abgeschaltet, sondern daß eine Drehstrom-Restspannung von 30 % belassen wird, die die Motorwicklung trotz Dauerbelastung nur mäßig erwärmt.

Eine niedrige Restspannung kann auch erst kurz (zum Beispiel 1 Sekunde) vor der gewollten Öffnungsbetätigung des Ventils zugeschaltet werden. Diese Spannung würde dann innerhalb eines Leerwinkels, der zwischen 0° und 50° liegen kann, den Motor zunächst in Schließrichtung auf unter 50 % seiner Drehzahl beschleunigen, einen leichten, bedeutungslosen Hammerschlag in Schließrichtung ausüben, und dann in umgesteuerter Drehrichtung mit voller Kraft in der Richtung schlagen, die von der Endstellung wegführt. Dieser Vorgang kann durch einfache Zeitglieder automatisiert und gegebenenfalls sogar repetierend organisiert werden.

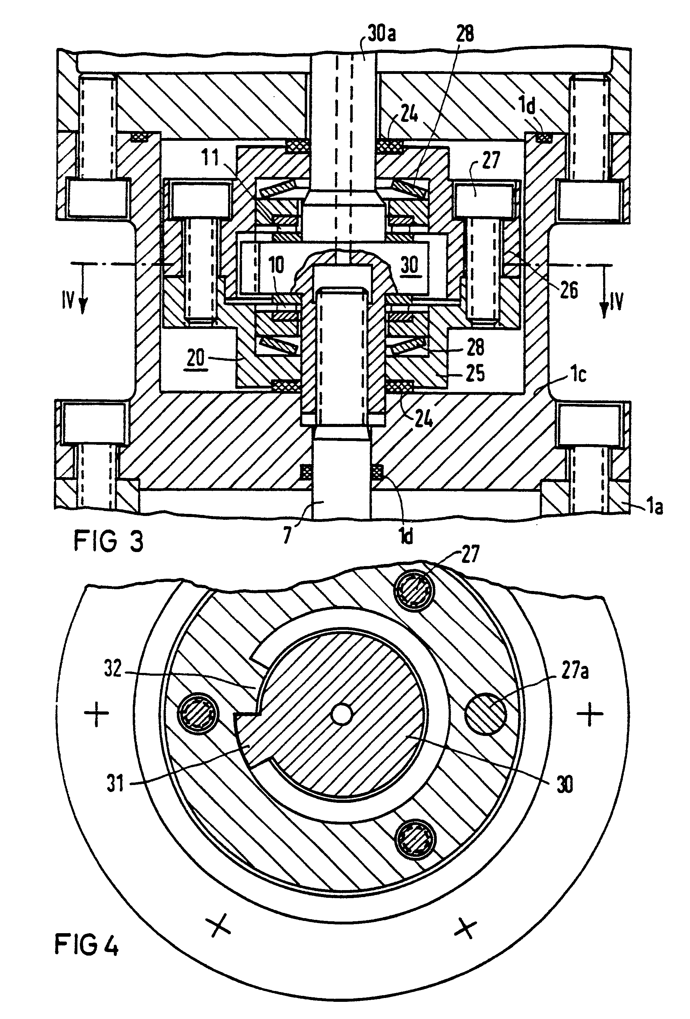

In den Fig. 3 und 4 ist eine als Ganzes mit 20 bezeichnete Bremsbuchse dargestellt, innerhalb der sich die Gewindemutter 30 auf ihren Wälzlagern 11 und 10 reibungsarm drehen kann. Der Wellenfortsatz 30a der Gewindemutter 30 greift in die (auf Fig. 1 dargestellte) Abtriebswelle 16 des Antriebs 17, 18 ein und erhält von dort das benötigte Drehmoment. Die Mutter 30 betätigt die drehfixierte Gewindespindel 7 und das daran befestigte Verschlußstück 6 (Fig. 1). Nach einem leeren Drehwinkel von 330° dreht sie außerdem die Bremsbuchse mit, die sich mit stirnseitigen Gleitflächen auf dem Bremsgehäuse 1c abstützt. Unter der Wirkung einer Axialkraft in der Spindel 7 entsteht ein Bremsmoment, das beispielsweise etwa doppelt so groß ist wie das ohne Bremsung an der Mutter 30 für die gleiche Spindelkraft benötigte Drehmoment. Von einem vorgegebenen Stillstandsmoment des Antriebs 17, 18 von zum Beispiel 30 Nm stehen somit nur 10 Nm zur Erzeugung der Spindelkraft zur Verfügung, also nur ein Drittel des Wertes ohne Bremsbuchse. Beim Zurückdrehen dagegen entfällt die Bremsung über den Leerwinkelbereich, so daß die Armatur mit großer Sicherheit öffnen kann. Die Bremsbuchse 20 ist ein Gehäuse, das aus zwei Schalen 25 und 26 besteht, die mit Schrauben 27 und einem Paßstift 27a verbunden sind. Die Stirnflächen der Schalen sind mit Bronzescheiben 24 ausgestattet, deren stirnseitige Reibflächen mit radialen Riefen versehen sind, damit sich kein zusammenhängender Schmierfilm ausbilden kann. Vor dem Verlust der Fettfüllung im Bremsgehäuse 1c schützen Elastomer-0-Ringe 1d. Das Bremsgehäuse ist auf der Ventillaterne 1a montiert.

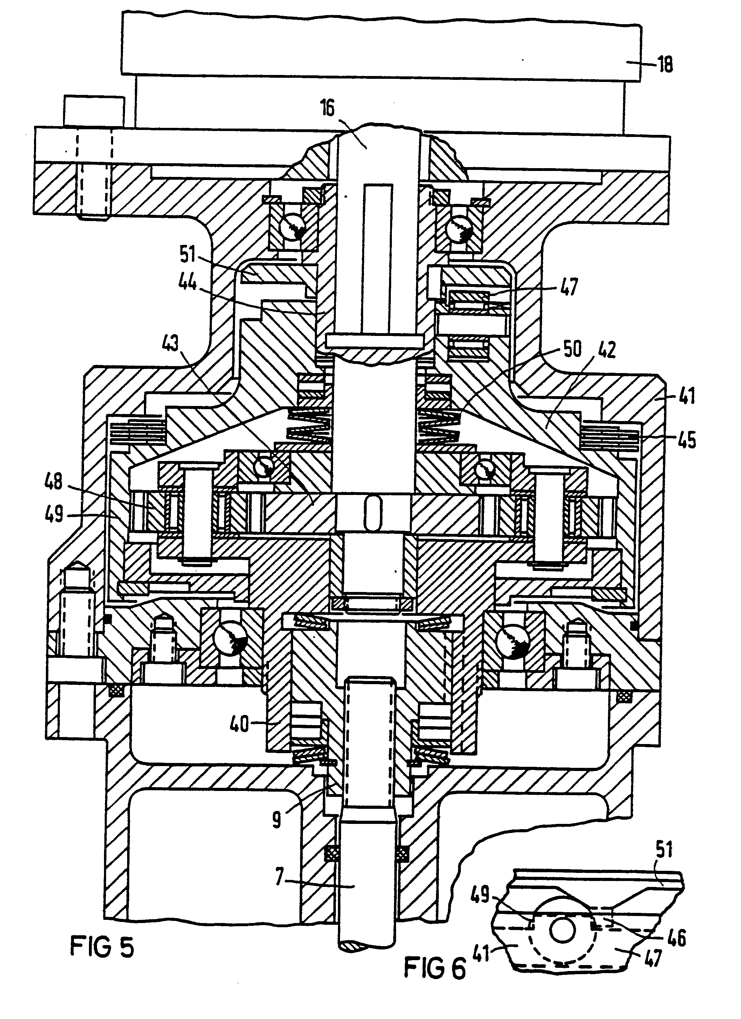

Bei dem Ausführungsbeispiel nach Fig. 5 ist ein Planetengetriebe 41 vorgesehen, das das Drehmoment der Abtriebswelle 16 des Antriebs (18) um den Faktor 3 erhöht. Das erhöhte Drehmoment wird vom Planetenträger 40 abgegeben auf die Gewindemutter 9, die die Spindel 7 betätigt.

Der Erhöhungsanteil des Drehmoments muß, wie bei jedem Verzweigungsgetriebe, von einer dritten Welle aufgenommen werden, die unabhängig drehfixiert wird. Diese dritte Welle hat die Form eines Glockenkörpers 42 mit einem innen verzahnten Hohlkranz 49, in den drei Planetenzahnräder 48 eingreifen. Dieser Glockenkörper wird durch eine Lamellenbremse 45 an der Drehung gehindert. Das Sonnenrad 43 ist auf der Getriebewelle 44 drehfixiert befestigt, während der Planetenträger 40 sich relativ dazu verdrehen kann. Die Relativdrehung ist allerdings durch den Anschlag 46 auf etwa 340° begrenzt, der Bestandteil einer sich mit der Getriebewelle 44 mitdrehenden Scheibe 51 ist.

Wie aus Fig. 6 ersichtlich, kommt kurz vor dem Erreichen des Gegenanschlags 49, der aus dem Glockenkörper herausgefräst ist, eine in den Glockenkörper eingebaute Rolle 47 an eine 30°-Schräge der Mitnehmerscheibe 51 zu liegen. Sobald ein Relativdrehmoment zwischen der Getriebewelle 44 und dem Glockenkörper 42 entsteht, verschiebt die Rolle 47 diesen Glockenkörper in axialer Richtung gegen das vorgespannte Tellerfedernpaket 50. Hierdurch wird die Lamellenbremse 45 gelöst, so daß die Funktion des Verzweigungsgetriebes (1 : 3) übergeht in eine reine Momentdurchleitung (1 : 1). Der Übergang von der einen zur anderen Betriebsart erfolgt nicht sprunghaft. Solange das durch die Gegenkraft der Spindel 7 erzeugte Relativdrehmoment noch mäßig ist (zum Beispiel 25 % des Auslegungswertes), kann die Rolle 47 die Tellerfeder 50 nur teilweise zusammendrücken. Dementsprechend rutscht die Lamellenbremse mit einem Restwiderstand durch, der in dem Maße kleiner wird, wie die Spindel mehr Kraft erfordert.

Wie aus Fig. 5 ersichtlich, ist die Mutter 9 und die Spindel 7 eng mit dem Verzweigungsgetriebe und dem Motor zusammengebaut. Diese Kompakteinheit kann mit Anschlußflanschen etc. so gebaut werden, daß der Begriff Schubantriebseinheit anwendbar wird.

Bei manchen Armaturen, vor allem Schiebern, ist möglicherweise eine Antriebsumdrehung, bzw. eine 1/3 Drehung der Spindel zu wenig, um aus der Endlage freizukommen. In diesem Fall kann durch eine nicht dargestellte Zusatzmechanik sichergestellt werden, daß die Mitnehmerscheibe 51 erst nach zwei oder mehreren Antriebsumdrehungen mit dem Anschlag 46 und der Rolle 47 in Eingriff kommt.

Das Verzweigungsgetriebe nach Fig. 5 erfordert im Vergleich zu den anderen Varianten ein relativ niedriges Drehmoment am Motor. Es ist besonders geeignet für den Antrieb durch einen vielpoligen sogenannten Drehfeldmagneten, der für Stillstandsbetrieb ausgelegt ist. Ein derartiger z. B.

16-poliger Motor ist im Vergleich zu einem 4-poligen Motor mit Getriebe besonders unempfindlich gegen Wicklungsüberhitzung auch bei wiederholtem Schalten und entwickelt dank seiner kleinen kinetischen Rotationsenergie eine besonders geringe Überhöhung des Drehmoments beim Anfahren der Ventilendstellungen. Die primitive Zuschaltung der ungeregelten Drehstromspannung und ihre Wiederabschaltung mittels Zeitglied, ermöglicht in vielen Anwendungsfällen zuverlässige Armaturenfunktion.

**Patentansprüche**

1. Verfahren zum Absperren einer Strömung, mit einer Armatur mit einem Gehäuse (1), in dem ein Verschlußstück (6) mit Hilfe eines Gewindes (7, 9) zwischen der Auf- und der Zu-Endstellung bewegbar ist, mit einem Drehantrieb (18), der in der Zu-Endstellung der Armatur mit zeitlicher Verzögerung abgeschaltet wird, mit einem nachgiebigen Glied (28), das die durch die kinetische Energie des Antriebs erzeugte Drehmomentüberhöhung in dieser Endstellung begrenzt, und mit einer Drehmomentsteuerung des Antriebs, dadurch gekennzeichnet, daß der dem gesamten Hub des Verschlußstückes (6) entsprechende Drehbereich des Antriebs (18) für beide Fahrrichtungen in zwei Teilen durchlaufen wird, von denen der erste, der Anfangsbereich, in der Endstellung beginnt und vor Erreichen der neuen Endstellung endet, und der zweite, der Restbereich, den Teil vom Ende des Anfangsbereichs bis zum Erreichen der neuen Endstellung umfaßt, wobei im Anfangsbereich mit einem verfügbaren Anlaufdrehmoment (Losbrechmoment) des Antriebs (18) gefahren wird, das unter Berücksichtigung der unteren Toleranzgrenze der Energieversorgung um mindestens 10 % höher ist als das größte Drehmoment, das der Antrieb (18) unter Berücksichtigung der oberen Toleranzgrenze der Energieversorgung im Restbereich aufbringen kann.

2. Verfahren nach Anspruch 1, dadurch gekennzeichnet, daß der Antrieb (18) frühestens 0,5 Sekunden nach dem Ende der für den gesamten Drehbereich benötigten Laufzeit abgeschaltet wird.

3. Verfahren nach Anspruch 1, dadurch gekennzeichnet, daß die Versorgungsspannung eines elektrischen Antriebsmotors (18) im Restbereich gegenüber der im Anfangsbereich um mindestens 10 % herabgesetzt wird, wobei die Herabsetzung weg- oder vorzugsweise zeitabhängig ausgelöst wird.

4. Armatur zur Ausübung des Verfahrens nach Anspruch 3, dadurch gekennzeichnet, daß der Elektromotor (18) ein Drehstrommotor mit Käfigläufer ist, dessen Kippmoment nicht größer ist als das Anlaufmoment.

5. Armatur zur Ausübung des Verfahrens nach einem der Ansprüche 1 bis 4, mit einem selbsthemmenden Gewinde, dadurch gekennzeichnet, daß der Antrieb (18) im Anfangsbereich über einen Leerwinkel von 3° bis 180° gegenüber dem drehbaren Gewindebauteil (9) frei beweglich ist und beschleunigt werden kann, und daß der Antrieb (18) dann über einen kleinen Zusatzwinkel so ungedämpft mit dem drehbaren Gewindebauteil (9) verbunden ist, daß die kinetische Energie des Antriebes (18) das Drehmoment mehr als verdoppelt.

6. Armatur nach Anspruch 5, dadurch gekennzeichnet, daß der Betrag des Leerwinkels und das Verhältnis der Spannungsherabsetzung so aufeinander abgestimmt sind, daß der Elektromotor (18) bei voller Spannung mehr als 90 % seiner Nenndrehzahl erreicht, während bei herabgesetzter Spannung nicht mehr als 50 % erreicht werden, daß am Ende des Leerwinkels Mitnehmer (9a) vorhanden sind, an denen die Rotationsenergie des Motors (18) zu einer momentanen Kraftspitze umgesetzt wird, die bei voller Spannung das Losbrechen des möglicherweise festsitzenden Gewindes (7, 9) bewirkt, und daß der Drehantrieb (18) in der endstellungsseitigen Ausgangslage im Leerwinkelbereich gehalten (z. B. mittels Bremse) oder vorab dorthin zurückgestellt wird (z. B. mittels Niedrigspannung am Elektromotor).

7. Armatur nach Anspruch 6, dadurch gekennzeichnet, daß die Steuerung des Elektromotors (18) einen Rückwärts- und Vorwärtslauf auslöst, bis das Verschlußstück (6) den Bereich der geschlossenen Endstellung (z. B. 20 % des Hubes) verläßt.

8. Armatur zur Ausübung des Verfahrens nach Anspruch 1, dadurch gekennzeichnet, daß der Drehantrieb im Restbereich durch eine zusätzliche Reibungsbremse (20) belastet wird, die das im Gewinde verfügbare Drehmoment um mindestens 10 % gegenüber seinem Wert im Anfangsbereich herabsetzt.

9. Armatur nach Anspruch 8, dadurch gekennzeichnet, daß der Anfangsbereich als Leerwinkel zwischen der Gewindemutter (30) und einer Bremsbuchse (20) vorgegeben ist, die zur Spindelmutter (9) hin mit einem Wälzlager (11, 16), zum Gehäuse hin mit einem Gleitlager ausgestattet ist, und daß der Leerwinkel kleiner ist als eine volle Umdrehung des Antriebs.

10. Armatur zur Ausübung des Verfahrens nach Anspruch 1, dadurch gekennzeichnet, daß zwischen dem Drehantrieb (18) und dem drehbaren Gewindebauteil (9) ein Schaltgetriebe (41) angeordnet ist, das im Anfangsbereich eine Drehmomenterhöhung um mindestens den Faktor 1,2, vorzugsweise 3,0, gegenüber dem Drehmoment des Antriebs im Restbereich bewirkt.

11. Armatur nach Anspruch 10, dadurch gekennzeichnet, daß das Schaltgetriebe ein Verzweigungsgetriebe (41) mit drei Wellen, insbesondere Planetenzahnradgetriebe ist, dessen treibende Welle (16) die getriebene Welle (7) am Ende des Anfangsbereiches mitnimmt, wobei das im Mitnehmer übertragene relative Drehmoment zu einer selbsttätigen Schaltbewegung führt, die die dritte Welle (42) des Verzweigungsgetriebes aus ihrer Drehfixierung mit dem Getriebegehäuse (41) löst, solange dieses Drehmoment einen vorgebbaren Wert überschreitet.

12. Armatur nach Anspruch 11, dadurch gekennzeichnet, daß der Mitnehmer (51) einen Anschlag und eine gegen eine Schräge mit 20° bis 70° Steigung laufende Rolle (47) umfaßt, und daß die Drehfixierung durch eine Reibungsbremse, vorzugsweise eine Lamellenbremse (45) bewirkt, die durch eine Axialfeder (50) vorgespannt ist.

13. Armatur nach einem der Ansprüche 4 bis 12, dadurch gekennzeichnet, daß die Spindelstellungen durch wegabhängige Endschalter (7b, 7c) erfaßt werden, die zur Abschaltung des Antriebs (18) in der Offenstellung, zur Kontrolle einer Repetierautomatik und/oder zur Gewinnung einer etwaigen Störmeldung nach erfolglosem Ablauf der vorgegebenen Fahrzeit benutzt werden.

14. Armatur nach einem der Ansprüche 4 bis 13, dadurch gekennzeichnet, daß die Offenstellung durch einen Gegenanschlag, vorzugsweise einen Rücksitz (6a), definiert ist, daß dort ein weiteres nachgiebiges Glied zur Begrenzung der Drehmomentüberhöhung vorgesehen ist, und daß die für die Schließstellung vorliegende Ausbildung symmetrisch für die Offenstellung vorgesehen ist.

15. Armatur nach einem der Ansprüche 4 bis 14, dadurch gekennzeichnet, daß der Drehantrieb (18), die Gewindebauteile (7, 9) und die Zwischenglieder baulich zu einem Schubantrieb zusammengefaßt sind.

**Claims**

1. Method for shutting off a flow with a fitting with a housing (1) in which a sealing member (6) can be moved with the help of a thread (7, 9) between the open and closed end position ; with a turning drive mechanism (18) which is switched off in the closed end position of the fitting with time delay ; with a flexible member (28) which limits the torque increase in this end position, produced by the kinetic energy of the drive mechanism ; and with a torque control of the drive mechanism, characterized in that the turning range of the drive mechanism (18), corresponding to the entire travel of the sealing member (6), is traversed for both travel directions in two parts, of which the first, the starting range, begins in the end position and ends before reaching the new end position, and the second, the residual range, comprises the part from the end of the starting range up until the new end position is reached, whereby in the starting range there is travel with an available starting torque (breakaway torque) of the drive mechanism (18), the starting torque, in view of the lower tolerance limit of the energy supply, being at least 10 % greater than the greatest torque which the drive mechanism (18), in view of the upper tolerance limit of the energy supply, can produce in the residual range.

2. Method according to claim 1, characterized in that the drive mechanism (18) is switched off at the earliest 0.5 seconds after the end of the running time necessary for the entire turning range.

3. Method according to claim 1, characterized in that the supply voltage of an electrical driving motor (18) is reduced by at least 10 % in the residual range as opposed to that in the starting range, the reduction being initiated dependent upon position or preferably upon time.

4. Fitting for practicing the method according to claim 3, characterized in that the electric motor (18) is a three-phase motor with cage rotors, the breakdown torque of which is not greater than the starting torque.

5. Fitting for practicing the method according to one of claims 1 to 4 with a self-locking thread, characterized in that the drive mechanism (18) is freely moving in the starting range across an empty angle of 3° to 180° opposite the rotatable thread component (9), and can be accelerated ; and that the drive mechanism (18) is then connected, by way of a small additional angle with the rotatable thread component (9), so undamped that the kinetic energy of the drive mechanism (18) more than doubles the torque.

6. Fitting according to claim 5, characterized in that the amount of the empty angle and the proportion of the voltage reduction are coordinated in such a way that the electric motor (18) with full voltage achieves more than 90 % of its rated speed, while with reduced voltage not more than 50 % is achieved ; that at the end of the empty angle drivers (9a) are present on which the rotational energy of the motor (18) is converted to an instantaneous peak of force which with full voltage effects the breakaway torque of the thread (7, 9) which is tightly fitting if possible ; and that the turning drive mechanism (18) is held in the side end position of the original position in the range of the empty angle (for example by means of a brake) or first of all is put back there (for example by means of low voltage on the electric motor).

7. Fitting according to claim 6, characterized in that the control of the electric motor (18) initiates a backward and forward motion until the sealing member (6) leaves the range of the closed end position (for example 20 % of the travel).

8. Fitting for practicing the method according to claim 1, characterized in that the turning drive mechanism in the residual range is strained by an additional friction brake (20) which reduces the torque available in the thread by at least 10 % as opposed to its value in the starting range.

9. Fitting according to claim 8, characterized in that the starting range is specified as empty angle between the thread nut (30) and a brake bushing (20) which is provided with a rolling bearing (11, 16) up to the spindle nut (9) and with a sliding bearing up to the housing ; and that the empty angle is smaller than a full turn of the drive mechanism.

10. Fitting for practicing the method according to claim 1, characterized in that between the turning drive mechanism (18) and the rotatable thread component (9) a controlling mechanism (41) is arranged which effects a torque increase of at least the factor 1.2, preferably 3.0 in the starting range, as opposed to the torque of the drive mechanism in the residual range.

11. Fitting according to claim 10, characterized in that the controlling mechanism is a branch mechanism (41) with three shafts, more particularly a planetary gear-wheel mechanism, the driving shafts (16) of which drive the driven shafts (7) at the end of the starting range, the relative torque, transmitted in the driver, leading to an automatic control movement which frees the third shaft (42) of the branch mechanism out of its rotational fixing with the housing of the mechanism (41), as long as this torque exceeds a value which can be specified.

12. Fitting according to claim 11, characterized in that the driver (51) comprises a stopper and a roller (47) running against a slope with a gradient of 20° to 70° ; and that the rotational fixing is effected by a friction brake, preferably a disc brake (45) which is prestressed by an axial spring (50).

13. Fitting according to one of claims 4 to 12, characterized in that the spindle positions are determined by position-dependent limit switches (7b, 7c) which are used for switching off the drive mechanism (18) in the open position, for controlling a repeater automatism and/or for obtaining a possible fault signal after unsuccessful operation of the specified driving time.

14. Fitting according to one of claims 4 to 13, characterized in that the open position is defined by a counter stopper, preferably a rear seat (6a) ; that a further flexible member is provided there for limiting the torque increase ; and that the form present for the closed position is planned as symmetrical for the open position.

15. Fitting according to one of claims 4 to 14, characterized in that the turning drive mechanism (18), the thread components (7, 9) and the intermediary members are constructed together into one push drive mechanism.

**Revendications**

1. Procédé pour arrêter un écoulement, comportant un élément de robinetterie muni d'un carter (1), dans lequel un organe de fermeture (6) peut être déplacé au moyen d'un filetage (7, 9) entre la position d'extrémité ouverte et la position d'extrémité fermée, un dispositif d'entraînement en rotation (18), qui est débranché avec un retard lorsque l'élément de robinetterie est dans la position d'extrémité fermée, un organe élastique (28), qui limite l'accroissement du couple produit par l'énergie cinétique du dispositif d'entraînement, dans cette position d'extrémité, et un dispositif de commande du couple du dispositif d'entraînement, caractérisé par le fait que la plage de rotation du dispositif d'entraînement (18), qui correspond à la course totale de l'organe de fermeture (6), dans les deux sens de déplacement, est parcouru dans deux sections, dont la première, la zone de départ, commence dans la position d'extrémité et se termine peu avant la nouvelle position d'extrémité, et dont la seconde, la zone restante, inclut la section s'étendant de l'extrémité de la zone de départ jusqu'à la nouvelle position d'extrémité, et que l'entraînement s'effectue dans la zone de départ avec un couple au démarrage disponible (couple initial de décollement) du dispositif d'entraînement (18), qui, compte tenu de la limite inférieure de tolérance de l'alimentation en énergie, est supérieur d'au moins 10 % au couple maximum que le dispositif d'entraînement (18) peut appliquer dans la zone restante, en tenant compte de la limite de tolérance supérieure de l'alimentation en énergie.

2. Procédé suivant la revendication 1, caractérisé par le fait que le dispositif d'entraînement (18) est débranché au plus tôt 0,5 seconde après la fin du temps de propagation nécessaire pour l'ensemble de la plage de rotation.

3. Procédé suivant la revendication 1, caractérisé par le fait que la tension d'alimentation d'un moteur électrique d'entraînement (18) est réduite, dans la zone restante, d'au moins 10 % par rapport à la zone de départ, la réduction étant déclenchée en fonction du trajet parcouru ou de préférence en fonction du temps.

4. Elément de robinetterie pour la mise en œuvre du procédé suivant la revendication 3, caractérisé par le fait que le moteur électrique (18) est un moteur à courant triphasé à cage d'écureuil, dont le couple de maximum n'est pas supérieur au couple au démarrage.

5. Elément de robinetterie pour la mise en œuvre du procédé selon l'une des revendications 1 à 4, comportant un filetage autobloquant, caractérisé par le fait que le dispositif d'entraînement (18) peut se déplacer librement et être accéléré sur un angle à vide compris entre 3° et 180° par rapport au composant fileté rotatif (9), et que le dispositif d'entraînement (18) est alors relié, sans amortissement au composant rotatif (9), sur un faible angle additionnel, de telle sorte que l'énergie cinétique du dispositif d'entraînement (18) fait croître le couple à plus du double de sa valeur.

6. Elément de robinetterie suivant la revendication 5, caractérisé par le fait que la valeur de l'angle à vide et le rapport de réduction de la tension sont réglés l'un sur l'autre de manière que, pour la tension totale, le moteur électrique (18) atteint plus de 90 % de sa vitesse de rotation nominale, tandis que dans le cas d'une tension réduite, il n'atteint pas plus de 50 % de cette valeur, et qu'il est prévu des organes d'entraînement (9a) au niveau desquels, à l'extrémité de l'angle à vide, l'énergie de rotation du moteur (18) est convertie en une force maximale instantanée qui provoque, pour la tension totale, le décollement du filetage (7, 9) éventuellement coincé, et que le dispositif d'entraînement en rotation (18) est maintenu, dans la plage de l'angle à vide, dans la position initiale proche de la position d'extrémité (par exemple à l'aide d'un frein) ou a été préalablement ramené dans cette zone (par exemple à l'aide d'une basse tension appliquée au moteur électrique).

7. Elément de robinetterie selon la revendication 6, caractérisé en ce que la commande du moteur électrique (18) déclenche un déplacement de va-et-vient jusqu'à ce que l'organe de fermeture (6) quitte la zone de la position d'extrémité fermée (par exemple 20 % de la course).

8. Elément de robinetterie pour la mise en œuvre du procédé suivant la revendication 1, caractérisé par le fait que le dispositif d'entraînement en rotation est chargé, dans la zone restante, par un frein supplémentaire à friction (20), qui réduit d'au moins 10 % le couple disponible dans le filetage, par rapport à sa valeur dans la zone de départ.

9. Elément de robinetterie selon la revendication 8, caractérisé en ce que la zone de départ est prédéterminée en tant qu'angle à vide entre l'écrou (30) et une douille de frein (20), qui est pourvue d'un roulement à rouleaux (11, 16) en direction de l'écrou de broche (9) et d'un palier lisse en direction du carter, et que l'angle à vide est inférieur à une rotation complète du dispositif d'entraînement.

10. Elément de robinetterie pour la mise en œuvre du procédé selon la revendication 1, caractérisé par le fait qu'entre le dispositif d'entraînement en rotation (18) et le composant fileté rotatif (9) se trouve disposé un mécanisme de manœuvre (41) qui réalise dans la zone de départ un accroissement du couple au moins du facteur 1,2 et de préférence 3,0, par rapport au couple du dispositif d'entraînement dans la zone restante.

11. Elément de robinetterie suivant la revendications 10, caractérisé par le fait que le mécanisme de manœuvre est une transmission démultiplicatrice (41) comportant trois arbres, notamment une transmission à pignons satellites, dont l'arbre moteur (16) entraîne l'arbre mené (7) à l'extrémité de la zone de départ, auquel cas le couple relatif transmis par l'organe d'entraînement provoque un mouvement de commutation automatique, qui libère le troisième arbre (42) de la transmission démultiplicatrice de son blocage en rotation par rapport au carter de la transmission (41) tant que ce couple dépasse une valeur pouvant être prédéterminée.

12. Elément de robinetterie suivant la revendication 11, caractérisé par le fait que l'organe d'entraînement (51) comporte une butée et un galet (47) circulant sur une rampe possédant une inclinaison comprise entre 20° et 70°, et que le blocage en rotation est réalisé au moyen d'un frein à friction, de préférence un frein à disque (45), qui est précontraint au moyen d'un ressort axial (50).

13. Elément de robinetterie suivant l'une des revendications 4 à 12, caractérisé par le fait que les positions de la broche sont détectées par des interrupteurs de fin de course (7b, 7c) déclenchés en fonction de la distance parcourue et utilisés pour débrancher le dispositif d'entraînement (18) dans la position ouverte, contrôler un dispositif automatique de répétition et/ou obtenir une éventuelle signalisation de défaut après l'écoulement de la durée de déplacement prédéterminée.

14. Elément de robinetterie suivant l'une des revendications 4 à 13, caractérisé par le fait que la position ouverte est définie par une butée antagoniste, de préférence un appui arrière (6a), qu'il est prévu en cet endroit un autre organe élastique servant à limiter l'accroissement excessif du couple et que l'agencement existant pour la position fermée est prévu de façon symétrique pour la position ouverte.

15. Elément de robinetterie suivant l'une des revendications 4 à 14, caractérisé par le fait que le dispositif d'entraînement en rotation (18), les composants filetés (7, 9) et les organes intermédiaires sont réunis du point de vue construction pour former un servomoteur.

FIG 2

FIG 1

FIG 3

FIG 4

2

FIG 5

FIG 6